# EUROPEAN PATENT APPLICATION

(11) **EP 4 383 126 A1**
(43) Date of publication of application: **12.06.2024**
(21) Application number: 22852385.8
(22) Date of filing: 27.07.2022
(51) Int. Cl.: G06K 19/07, G06K 19/04, G09F 3/02, G09F 3/14, G09F 3/18, B65F 1/00, B65F 1/14, G07F 11/24, G07F 11/44

(54) **REUSABLE IDENTIFICATION DEVICE**

(30) Priority: 06.08.2021 ES 202131634 U
(71) Applicant: Guillem Picó, Ignacio, 03440 Ibi (Alicante) (ES)
(72) Inventor: Guillem Picó, Ignacio, 03440 Ibi (Alicante) (ES)
(74) Representative: Ibarra Garcia, Isabel
(86) International application number: PCT/ES2022/070494
(87) International publication number: WO 2023/012389

(57) **Abstract**

The present invention discloses a reusable identification device provided with a metallic portion and made up of a spherical body that houses an identification chip therein. Thus, the identification chip is provided with RFID or NFC technology. Advantageously, the configuration defined by the reusable identification device is embodied by a container, a hopper, a screen, a release mechanism and an RFID or NFC reader. Thus, including the RFID reader allows the reusable identification devices to be printed, so that an unequivocal link is established between the user and the waste deposited.

## Description

### OBJECT OF THE INVENTION

The present invention relates to an identification device which can be recovered to be reused for later uses. Thus, the reusable identification device of the present invention allows a method of tracking and identifying the waste linked to said device and to the user who deposits the waste to be established.

Namely, the invention consists of a spherical body having an integrated identification chip which makes it possible to establish traceability with the necessary linking to a user code and to the waste deposited by said user.

Additionally, the present invention is complemented with a dispenser storing the reusable identification devices of the invention, such that said dispenser allows a reusable identification device to be released at the request of a user. Advantageously, the dispenser includes an RFID reader/writer that allows a link to be established between the reusable identification device and the user who deposits the waste.

### BACKGROUND OF THE INVENTION

Spherical bodies using an RFID system for use in games of chance, as in the case of bingo, are known. Likewise, spherical devices for use in the sport of golf are also known, where their participation only helps in tracking the golf ball.

None of the known spherical bodies is provided with means to aid in its recovery by magnetization in order to have them available for later use.

Moreover, known waste marking and traceability systems are based on bags that can be delivered with printed RFID systems or labels that can be attached to them. The main drawback that arises with the use of known systems of this type is that both the printed bags and the adhered labels are not reusable, making their use in the field of waste recapture unfeasible due to the high associated cost that would be necessary to address in the separation thereof.

For this reason, the applicant of the present utility model understands that there are no known devices which allow, in an economically viable manner, the unification of a post-consumer household waste return and refund system.

### DESCRIPTION OF THE INVENTION

The reusable identification device proposed in the present invention allows the problems set forth above to be solved, providing a simple but effective solution, where the device of the invention allows a DRRS (deposit, return and refund system) to be implemented with full traceability to encourage the waste management 4.0, which waste is characterized by being reusable. Thus, the present invention relates to putting an end to the problem of the cost of implementing a DRRS of this type.

The reusable identification device thereby allows tracking and identification of post-consumer household or industrial waste to be unequivocally established.

The reusable identification device is made up of a spherical body that houses an identification chip therein, and wherein the identification device is provided with a metallic portion.

Advantageously, including said metallic portion makes it possible to recover the device developed in the subsequent waste management process, while the identification chip included in the device of the invention allows the waste to be linked to an identified specific user.

Namely, the user must link one of the reusable identification devices to the bag of waste to be deposited, such that the identification chip contained in the reusable identification device allows a waste deposit, return and refund system to be established, where even control by the user is feasible, specifically, to determine the type of waste deposited and verify the treatment to which it is subjected after being deposited.

Furthermore, once the user has the reusable identification device duly assigned to said user, said user must insert it inside the bag of waste itself such that it establishes the marking and traceability system of the deposited bag of waste, the waste being permanently linked to the user in question.

Optionally, the spherical body of the reusable identification device of the invention will be provided with a through hole through which the user can insert the handles of a bag of waste. That is, the through hole allows for tying the handles of the bag of waste, preventing the device from being inserted inside the bag.

It should be noted that the spherical body of the reusable identification device includes an RFID or NFC chip, which may be encoded and ready for reading and linking to a user, or ready for writing a code.

Optionally, the RFID or NFC identification chip used may be square-shaped, circular-shaped or have any other shape, provided that it can be arranged inside the spherical body.

Namely, the spherical body of the identification device of the invention completely or partially contains a metallic portion, either because the spherical body as a whole is formed by a metallic material (such as iron) or because the spherical body has been embodied in resin or plastic and additionally contains a metallic element by way of a ring or plate, for example. Including a metallic portion makes it possible to easily recover same in automatic sorting systems for post-consumer household waste or packages by means of magnets or electromagnets during the recirculation process.

The spherical body of the reusable identification device has an identifying character, such that it can be marked with a specifically devised writer that is arranged in a dispenser or dispensing machine.

That is, it becomes entirely necessary for the correct implementation of the use of the reusable identification device to complement the present invention with a dispenser which allows the controlled release of the reusable identification devices at the request of a particular individual.

The dispenser is embodied by the following elements:
- a container for storing a plurality of reusable identification devices;
- a hopper in which the released reusable identification device is deposited;
- an external screen as an interface which is located on the outside of the dispenser to allow interaction with the user;
- a release mechanism to aid in the exit of the reusable identification device; and
- an RFID or NFC reader/writer.

Advantageously, including the RFID reader/writer allows the reusable identification devices to be printed, so that an unequivocal link is established between the user and the waste deposited.

The dispenser of the present invention allows the easy dispensing of reusable identification devices, and furthermore, its installation on large surfaces, in supermarkets, at points of sale, in the industrial sector, etc., for convenience of and proximity to the user is feasible. Naturally, the dispenser must be connected to an electrical source and to the Internet for data transfer.

Moreover, it is also foreseen that the dispenser will be integrated in known waste collection containers, so that the user simultaneously:
- collects the written reusable identification device (and therefore linked to them),
- attaches the written reusable identification device to the bag of waste, and
- deposits the reusable identification device together with the bag of waste in the container itself.

In any case, the dispenser is provided with an RFID or NFC element to detect the user who, with a mobile application or smart card, will be able to identify himself/herself. Subsequently, the software associated with the mobile application and the reader/writer allows linking the reusable identification device to be released with the user who has executed the device request.

Additionally, the application will be able to collect information to make the return of refund amounts in the case of household post-consumer or to identify that the waste captured in the post-industrial flow arrives at its treatment destinations.

The joint use of the reusable identification device together with the dispenser makes it possible to unequivocally mark the waste from household or industrial post-consumer and establish a link with the users, so that the type of waste and the user who deposited it can be very precisely controlled, even being able to track them via GPS. The user can thereby be informed at all times about where the waste he/she has produced is and how it is being managed.

In view of the above, the solution provided in the present invention offers a reusable identification device that makes it possible to establish the marking and traceability of waste and allows easy subsequent recovery by having a metallic portion, being a solution to the problems of DRRS return and refund systems as it is complemented by the dispenser of said reusable identification devices.

### DESCRIPTION OF THE DRAWINGS

To complement the description made below and for the purpose of helping to better understand the features of the invention according to a preferred practical embodiment thereof, a set of drawings is attached as an integral part of said description in which the following has been depicted in an illustrative and non-limiting manner:
Figure 1 shows a perspective view of the first preferred embodiment of the invention according to a reusable identification device.
Figure 2 shows an exploded view of the first preferred embodiment of the invention depicted in Figure 1.
Figure 3 shows a view of the reusable identification device of the invention depicted in the preceding figure, wherein the semi-sphere bodies are in the open position.
Figure 4 shows an exploded view of the second preferred embodiment of the invention according to a reusable identification device.
Figure 5 shows a view of the reusable identification device of the invention depicted in the preceding figure, wherein the semi-sphere bodies are in the open position.
Figure 6 shows a perspective view of the third preferred embodiment of the invention wherein the spherical body of the reusable identification device has a through hole.
Figure 7 shows a view of the reusable identification device of the invention depicted in the preceding figure, wherein the semi-sphere bodies of the reusable identification device are in the open position.
Figure 8 shows a view of the reusable identification device according to the fourth preferred embodiment of the invention, wherein the semi-sphere bodies of the reusable identification device are in the open position.
Figure 9 shows a view of the reusable identification device according to the fifth preferred embodiment of the invention, wherein the semi-sphere bodies of the reusable identification device are in the open position.
Figure 10 shows a perspective view of a dispenser of reusable identification devices according to a preferred embodiment of the invention, wherein the view depicted includes a partial section of the dispenser.
Figure 11 shows a front view of the dispenser depicted in the preceding figure.
Figure 12 shows a sectioned view of the dispenser depicted in Figure 10.
Figure 13 shows a rear perspective view of the dispenser of the invention depicted in Figure 10, wherein the container for storing a plurality of reusable identification devices is not depicted.
Figure 14 shows a perspective view of the dispenser, which is arranged in a waste container, such that the view includes two partial sections.
Figure 15 shows a perspective view with partial section of the dispenser depicted in the preceding figure.

### PREFERRED EMBODIMENT OF THE INVENTION

In view of the mentioned figures, it can be seen that the reusable identification device (1) of the present invention is made up of a spherical body that houses an identification chip (3) therein, and wherein the identification device is provided with a metallic portion.

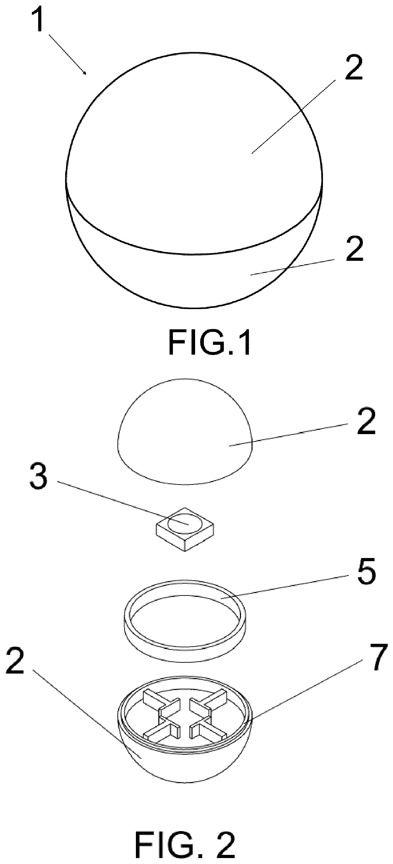

Preferably, the spherical body is made up of two semi-sphere bodies (2) which can be coupled to one another using attachment means, as can be seen in Figures 1 to 9.

According to the essential nature of the invention, it has been foreseen that the metallic portion present in the reusable identification device (1) of the invention may be formed by a ring (5), as seen in Figures 2, 4, 7, and 9 corresponding to the first, second, third, and fifth preferred embodiments of the invention, respectively.

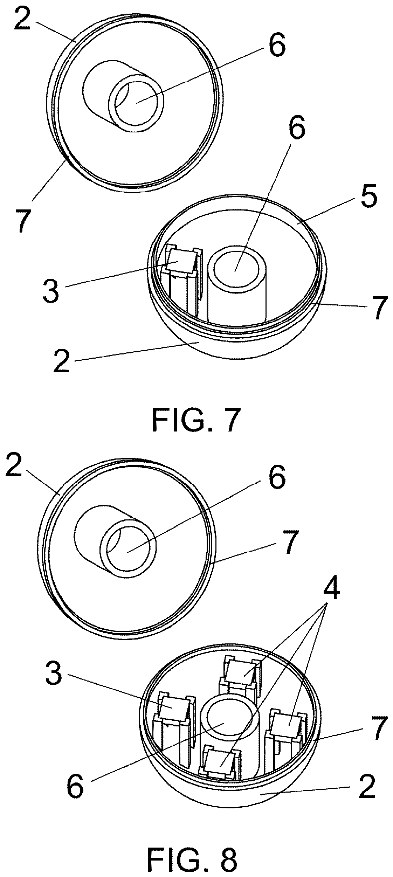

Moreover, the metallic portion can be formed by at least one steel plate (4). Namely, and as seen in the fourth preferred embodiment of the invention depicted in Figure 8, the metallic portion is made up of four steel plates (4) to aid in the subsequent recovery thereof during waste treatment.

As a last case, not depicted in the attached figures, the metallic portion is part of the spherical body itself making up the reusable identification device.

In any case, the metallic portion in any of the detailed embodiments makes up an essential element for enabling the subsequent recovery and reuse thereof during waste processing.

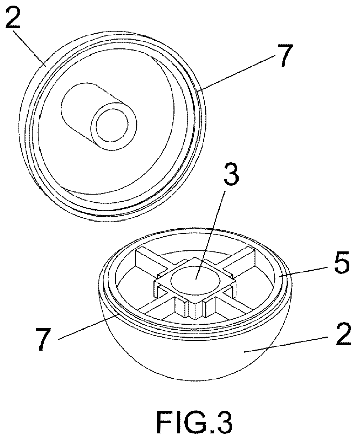

Moreover, the identification chip (3) is preferably provided with RFID or NFC technology. Thus, the identification chip (3) is square-shaped as seen in the first preferred embodiment of the invention depicted in Figures 2 and 3, and in the third and fourth preferred embodiments of the invention depicted in Figures 7 and 8, respectively.

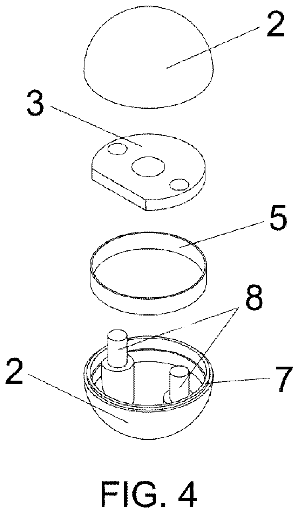

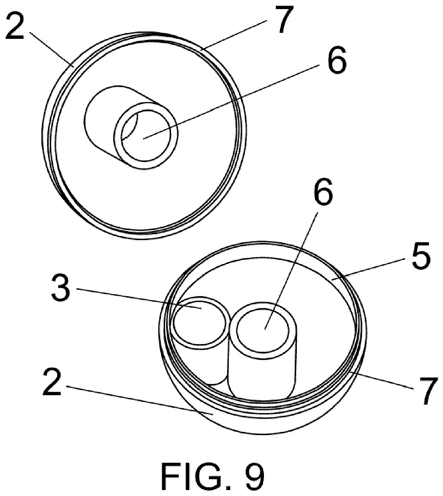

Moreover, the identification chip (3) is circular-shaped as seen in the fifth preferred embodiment of the invention depicted in Figure 9, or is half-moon-shaped as in the second preferred embodiment depicted in Figure 4.

In any case, the identification chip (3) must have dimensions such that they allow the chip to be inserted inside the spherical body making up the device of the invention.

According to another one of the features of the preferred embodiment of the invention, the spherical body is formed by two semi-sphere bodies (2) coupled to one another using attachment means made up of perimetral channels (7) arranged in the proximity of the edges of the semi-sphere bodies (2).

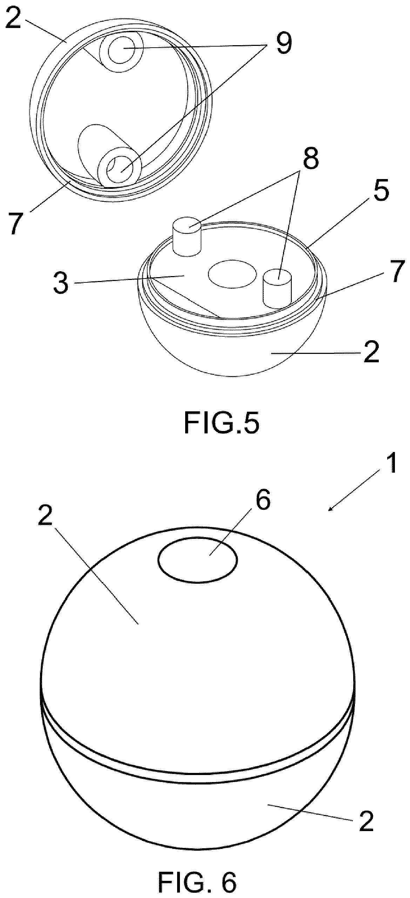

Optionally, as can be seen in the second preferred embodiment of the invention depicted in Figures 4 and 5, the attachment means are complemented with at least one projection (8) extending from the inside of one of the semi-sphere bodies (2). The projection (8) is coupled on at least one cavity (9) arranged in opposition in the other semi-sphere body (2), thereby providing greater clamping securing.

Moreover, as can be seen in Figures 6, 7, 8, and 9, the reusable identification device (1) optionally has a through hole (6) centered in the spherical body that makes it easier to be attached to a bag of waste by means of inserting the handles of the bag of waste through same.

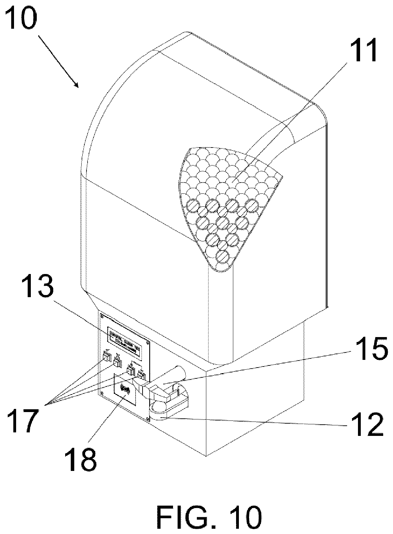

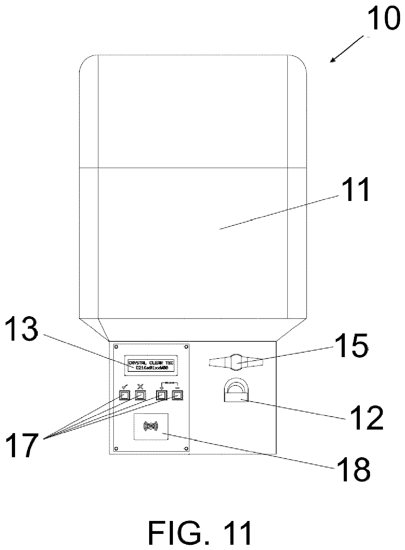

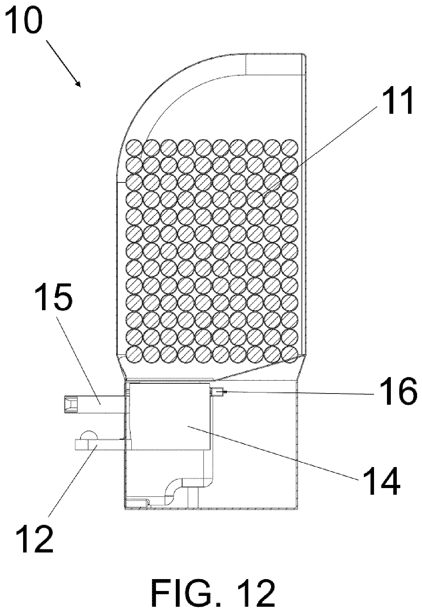

The reusable identification device (1) described above is complemented with a dispenser (10) depicted in Figures 10, 11, 12, and 13.

The dispenser (10) is embodied by a container (11) for storing a plurality of reusable identification devices (1), a hopper (12) in which the released reusable identification device (1) is deposited, an external screen (13) as an interface which is located on the outside of the dispenser (10) to allow interaction with the user, a release mechanism to aid in the exit of the reusable identification device (1) and an RFID or NFC reader/writer (18).

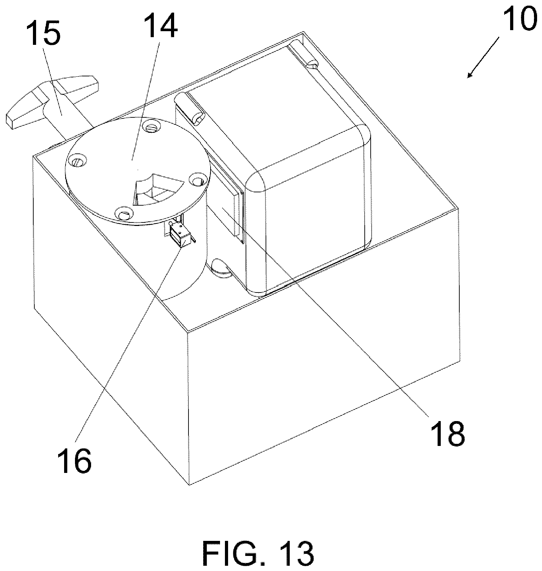

Namely, the release mechanism depicted in detail in Figure 13, which is part of the dispenser (10), is made up of a mechanical rotational mechanism (14) that aids in the movement of the reusable identification device (1) towards the hopper (12) and is linked to a lever (15) that can be operated by the user for the removal or release of the reusable identification device (1).

Furthermore, said release mechanism has a locking element (16) coupled to same that ensures the tightness of reusable identification devices (1) in the event that the removal thereof is not requested.

Durante the process of removing the reusable identification device (1), the RFID or NFC reader/writer (18) marks the device to link same to the user making the request for removal.

For better data communication and interference between the dispenser (10) and the user, a user interface preferably provided with push buttons (17) and an external screen (13), which may optionally be a touch screen, is provided.

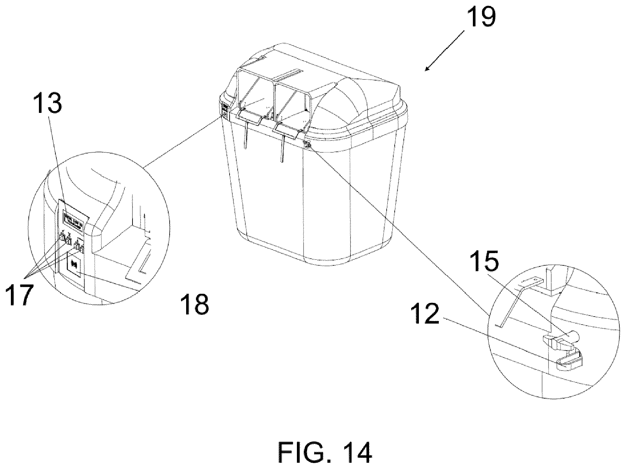

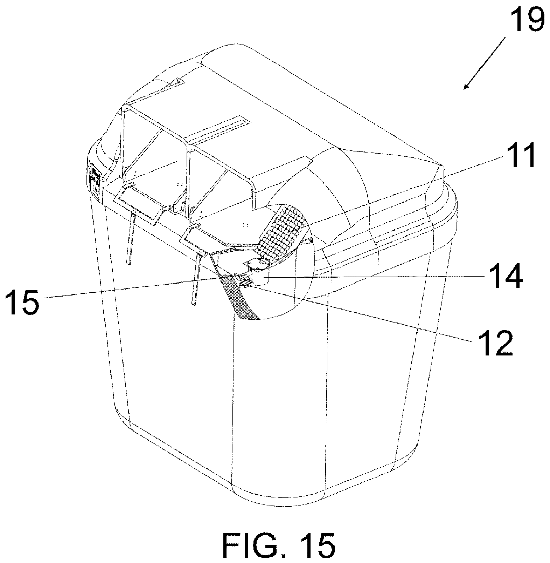

Lastly, it should be noted that said dispenser (10) can be integrated in a waste collection container (19), as depicted in Figures 14 and 15.

## Claims

1. A reusable identification device (1), **characterized in that** it is made up of a spherical body that houses an identification chip (3) therein, and wherein the identification device (1) is provided with a metallic portion.

2. The reusable identification device (1) according to claim 1, **characterized in that** the spherical body is made up of two semi-sphere bodies (2) which can be coupled to one another using attachment means.

3. The reusable identification device (1) according to claim 1, **characterized in that** the metallic portion is formed by at least one steel plate (4).

4. The reusable identification device (1) according to claim 1, **characterized in that** the metallic portion is formed by a ring (5).

5. The reusable identification device (1) according to claim 1, **characterized in that** the metallic portion is part of the spherical body itself.

6. The reusable identification device (1) according to claim 1, **characterized in that** the identification chip (3) is provided with RFID or NFC technology and is square-shaped or circular-shaped.

7. The reusable identification device (1) according to claim 2, **characterized in that** the attachment means are made up of perimetral channels (7) arranged in the proximity of the edges of the semi-sphere bodies (2).

8. The reusable identification device (1) according to claim 7, **characterized in that** the attachment means are complemented with at least one projection (8) extending from the inside of the semi-sphere bodies (2), which is coupled in at least one cavity (9) arranged in opposition in the other semi-sphere body (2).

9. The reusable identification device (1) according to any of the preceding claims, **characterized in that** the spherical body has a through hole (6).

10. The reusable identification device (1) according to claim 1, **characterized in that** it is complemented with a dispenser (10) of the reusable identification devices (1) embodied by:
- a container (11) for storing a plurality of reusable identification devices (1),
- a hopper (12) in which the released reusable identification device (1) is deposited,
- an external screen (13) as an interface which is located on the outside of the dispenser (10) to allow interaction with the user,
- a release mechanism to aid in the exit of the reusable identification device (1), and
- an RFID or NFC reader/writer (18).

11. The reusable identification device (1) according to claim 10, **characterized in that** the release mechanism of the dispenser (10) is made up of a mechanical rotational mechanism (14) linked to a lever (15).

12. The reusable identification device (1) according to claim 10 or 11, **characterized in that** the release mechanism of the dispenser (10) includes a locking element (16).

13. The reusable identification device (1) according to claim 10, **characterized in that** the dispenser (10) is provided with push buttons (17).

14. The reusable identification device (1) according to claim 10, **characterized in that** the external screen (13) of the dispenser (10) is a touch screen.

15. The reusable identification device (1) according to any of the claims 10 to 14, **characterized in that** the dispenser (10) is integrated in a waste collection container (19).
